# EUROPEAN PATENT APPLICATION

(11) **EP 4 431 371 A1**
(43) Date of publication of application: **18.09.2024**
(21) Application number: 24154773.6
(22) Date of filing: 30.01.2024
(51) Int. Cl.: B62D 25/02

(54) **VEHICLE BODY SIDE STRUCTURE OF VEHICLE AND VEHICLE BODY STRUCTURE OF VEHICLE**

(30) Priority: 02.03.2023 JP 2023032011
(71) Applicant: Suzuki Motor Corporation, Shizuoka 432-8611 (JP)
(72) Inventor: MOCHIZUKI, Shinei, HAMAMATSU-SHI, 432-8611 (JP); SUGIYAMA, Koji, HAMAMATSU-SHI, 432-8611 (JP); KUMETA, Yusuke, HAMAMATSU-SHI, 432-8611 (JP); TSUJIMOTO, Masayuki, HAMAMATSU-SHI, 432-8611 (JP)
(74) Representative: Plasseraud IP

(57) **Abstract**

[Problem to be Solved] To provide a vehicle body side structure that can reduce an increase in vehicle body weight and improve vehicle body rigidity.

[Solution] A vehicle body side structure having a door opening 10 includes a side annular vehicle body frame 70 having an annular shape, the side annular vehicle body frame 70 includes a hinge pillar 15 and a front pillar 16 that extend in an up-down direction at the front side of the door opening 10, a roof side rail 17 that extends rearward from an upper end of the front pillar 16 at the upper side of the door opening 10, a rear pillar 18 that extends downward from a rear end of the roof side rail 17 at a distance rearward from a rear peripheral edge portion 11c of the door opening 10, a rear side member 19 that extends forward from a lower end of the rear pillar 18 at a distance downward from a lower peripheral edge portion 11d of the door opening 10, and a side sill 20 that extends forward from a front end of the rear side member 19 at the lower side of the door opening 10, and a cross section perpendicular to an annularly extending direction of the side annular vehicle body frame 70 is formed as a closed cross section at any position.

## Description

### [Technical Field]

The present invention relates to a vehicle body structure of a vehicle such as a motor vehicle and specifically relates to a vehicle body side structure of a side portion of a vehicle.

### [Background Art]

As an example of this type of vehicle body structure of a vehicle, a vehicle body structure described in Patent Literature 1 is known. The vehicle body structure described in Patent Literature 1 includes a first annular vehicle body frame, which is an annular vehicle body frame that includes a pair of left and right lower reinforcements coupled to the vicinity of rear damper (rear suspension) supports and has a substantially annular shape in front view, a second annular vehicle body frame, which is an annular vehicle body frame having a substantially annular shape in front view by passing through the vicinity of front damper (front suspension) supports, a third annular vehicle body frame that is formed along a side door opening and has a substantially annular shape in side view, and a fourth annular vehicle body frame that is disposed rearward of the third annular vehicle body frame and has a substantially annular shape in side view. Two of the annular vehicle body frames, the third annular vehicle body frame and the fourth annular vehicle body frame, are disposed between the first annular vehicle body frame and the second annular vehicle body frame at a side portion of a cabin. Furthermore, a side pillar that constitutes a part of the fourth annular vehicle body frame also serves as the side pillar of the third annular vehicle body frame, and the third annular vehicle body frame and the fourth annular vehicle body frame are coupled through the side pillar.

In this manner, in the vehicle body structure disclosed in Patent Literature 1, two of the annular vehicle body frames, the third annular vehicle body frame and the fourth annular vehicle body frame, are disposed at the side portion of the cabin, and the third annular vehicle body frame and the fourth annular vehicle body frame are coupled through the side pillar.

### [Citation List]

### [Patent Literature]

[Patent Literature 1] JP 2019-196109 A

### [Summary of Invention]

### [Problem to be Solved by the Invention]

Thus, the vehicle body structure disclosed in Patent Literature 1 may not be able to efficiently improve the torsional rigidity of the vehicle body because the third annular vehicle body frame and the fourth annular vehicle body frame work separately against a load acting on the vehicle body when viewed in the entire cabin space.

The present invention has been made in view of the circumstances as described above, and an object thereof is to provide a vehicle body side structure that can reduce an increase in the vehicle body weight of a vehicle, efficiently improve the vehicle body rigidity, and improve the vibration characteristics of the vehicle body.

### [Means for Solving the Problem]

One aspect of the present invention is a vehicle body side structure of a vehicle having a door opening opened and closed by a door, the vehicle body side structure including a side annular vehicle body frame having an annular shape when viewed in a vehicle width direction, in which the side annular vehicle body frame includes a hinge pillar that constitutes a front peripheral edge portion of the door opening and extends in an up-down direction, a front pillar that constitutes the front peripheral edge portion of the door opening and extends upward from an upper end of the hinge pillar, a roof side rail that constitutes an upper peripheral edge portion of the door opening and extends rearward from an upper end of the front pillar, a rear pillar that extends downward from a rear end of the roof side rail at a distance rearward from a rear peripheral edge portion of the door opening, a rear side member that extends forward from a lower end of the rear pillar at a distance downward from a lower peripheral edge portion of the door opening, and a side lower reinforcing member that constitutes the lower peripheral edge portion of the door opening and extends from a front end of the rear side member to a lower end of the hinge pillar, and a cross section perpendicular to an annularly extending direction of the side annular vehicle body frame is formed as a closed cross section at any position in the annularly extending direction.

### [Advantageous Effect of Invention]

According to the aspect of the present invention, it is possible to provide the vehicle body side structure that can reduce an increase in the vehicle body weight of the vehicle, efficiently improve the vehicle body rigidity, and improve the vibration characteristics of the vehicle body.

### [Brief Description of Drawings]

[Figure 1] Figure 1 is a diagram showing a vehicle body right side portion of a vehicle according to an embodiment of the present invention from the inside.
[Figure 2] Figure 2 is a diagram showing a side annular vehicle body frame disposed at the vehicle body right side portion of the vehicle according to the embodiment of the present invention from the inside.
[Figure 3] Figure 3 is a sectional view on arrows A-A in Figure 2.
[Figure 4] Figure 4 is a sectional view on arrows B-B in Figure 2.
[Figure 5] Figure 5 is a sectional view on arrows C-C in Figure 2.
[Figure 6] Figure 6 is a sectional view on arrows D-D in Figure 2.
[Figure 7] Figure 7 is a sectional view on arrows E-E in Figure 2.
[Figure 8] Figure 8 is a sectional view on arrows F-F in Figure 2.
[Figure 9] Figure 9 is a sectional view on arrows G-G in Figure 2.
[Figure 10] Figure 10 is a sectional view on arrows H-H in Figure 2.
[Figure 11] Figure 11 is a sectional view on arrows I-I in Figure 2.
[Figure 12] Figure 12 is a sectional view on arrows J-J in Figure 2.
[Figure 13] Figure 13 is a sectional view on arrows K-K in Figure 2.
[Figure 14] Figure 14 is a sectional view on arrows L-L in Figure 2.
[Figure 15] Figure 15 is a diagram for simply explaining a joining structure between frame members according to the embodiment of the present invention in which Figure 15(a) shows coaxial joining, Figure 15(b) shows adjacent joining, Figure 15(c) shows corner joining, and
Figure 15(d) shows stepped joining.
[Figure 16] Figure 16 is a diagram for simply explaining a joining structure between a front pillar and a roof side rail according to the embodiment of the present invention in which
Figure 16(a) is a diagram of a joining portion between the front pillar and the roof side rail viewed in the longitudinal direction, Figure 16(b) is an enlarged view of the joining portion of

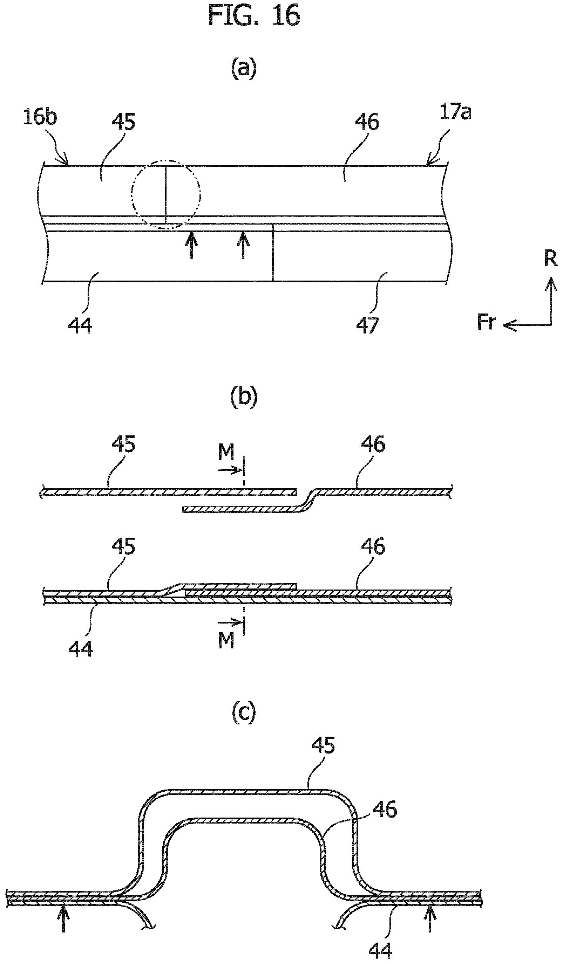

Figure 16(a), and Figure 16(c) is a diagram showing a cross section in the partially enlarged view of Figure 16(b).

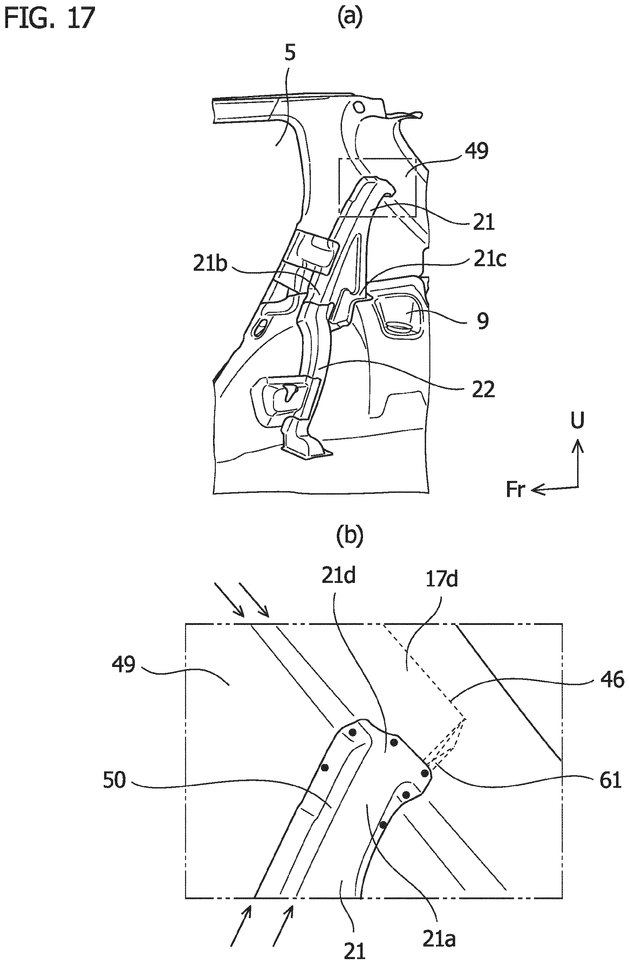

[Figure 17] Figure 17(a) is a diagram showing a joining structure between a roof side rail extension and a quarter pillar according to the embodiment of the present invention, and
Figure 17(b) is a partially enlarged view.

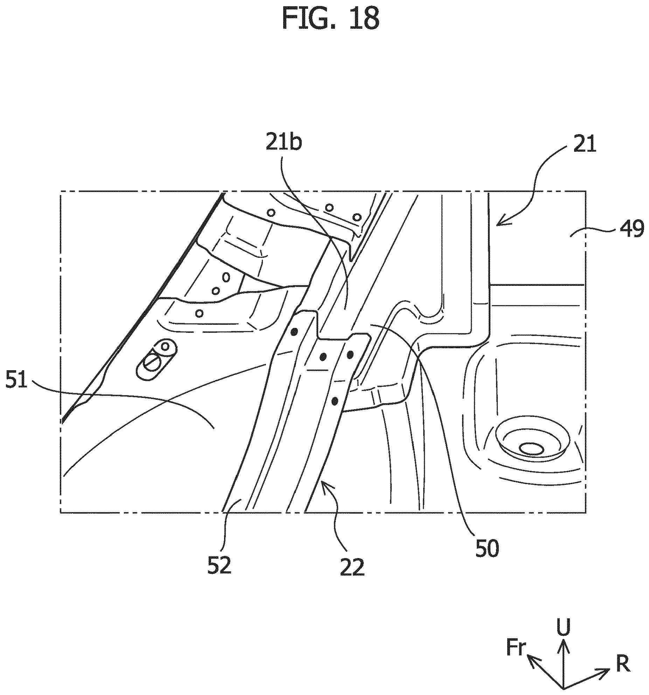

[Figure 18] Figure 18 is a diagram showing a joining structure between the quarter pillar and a rear wheel house reinforcement according to the embodiment of the present invention.

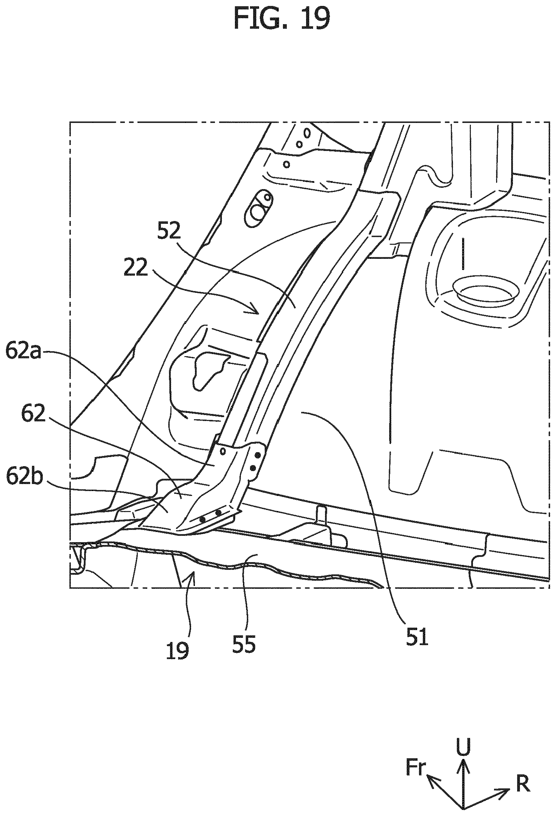

[Figure 19] Figure 19 is a diagram showing a joining structure between the rear wheel house reinforcement and a rear side member according to the embodiment of the present invention.

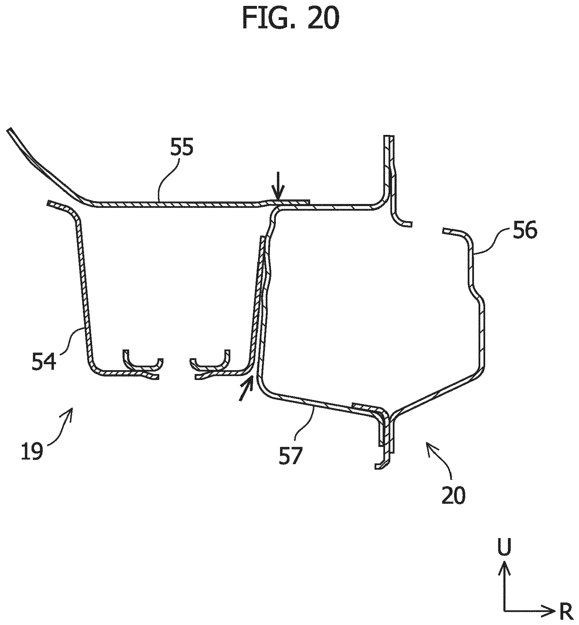

[Figure 20] Figure 20 is a diagram showing a joining structure between the rear side member and a side sill according to the embodiment of the present invention.

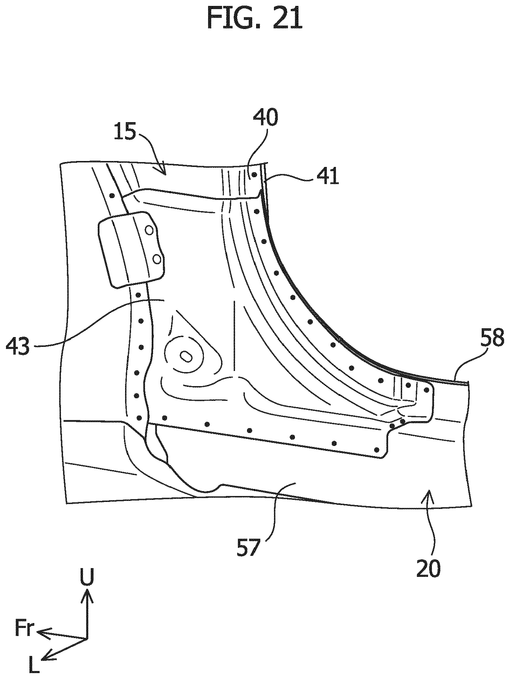

[Figure 21] Figure 21 is a diagram showing a joining structure between the side sill and a hinge pillar according to the embodiment of the present invention.

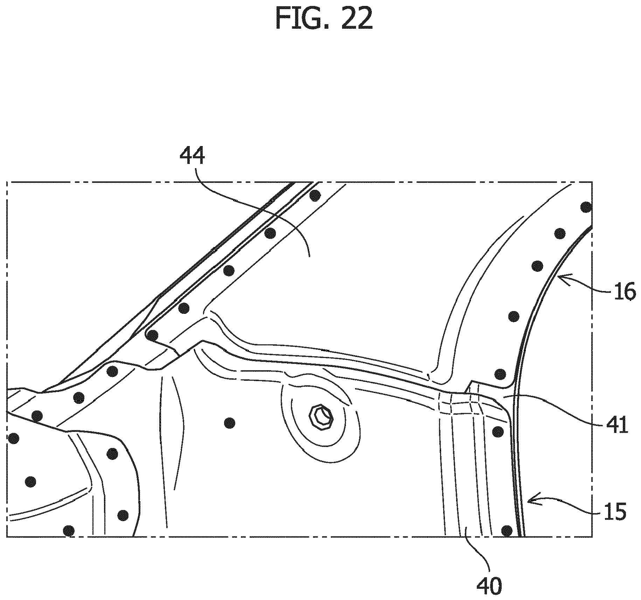

[Figure 22] Figure 22 is a diagram showing a joining structure between the hinge pillar and the front pillar according to the embodiment of the present invention.

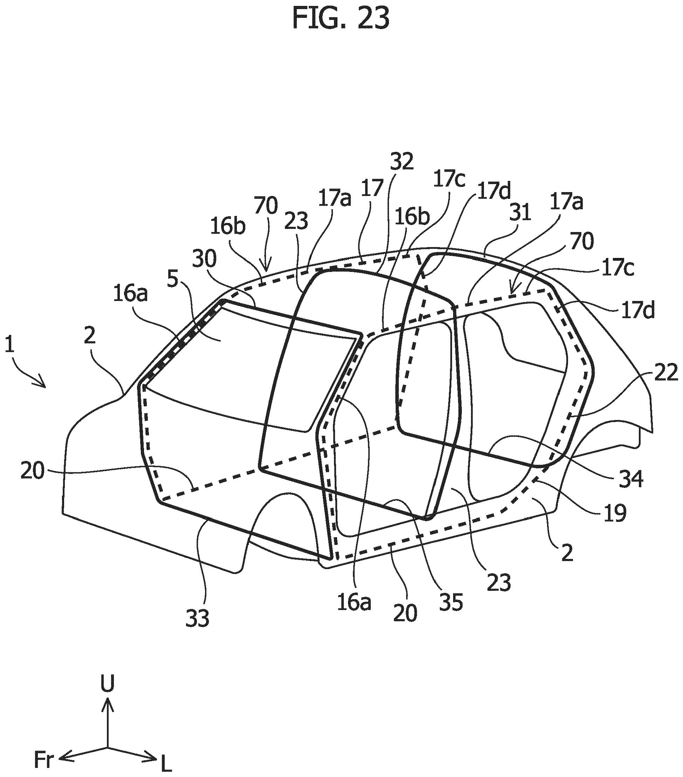

[Figure 23] Figure 23 is a perspective view of a vehicle body structure of the vehicle according to the embodiment of the present invention viewed from the front.

### [Mode for Carrying Out the Invention]

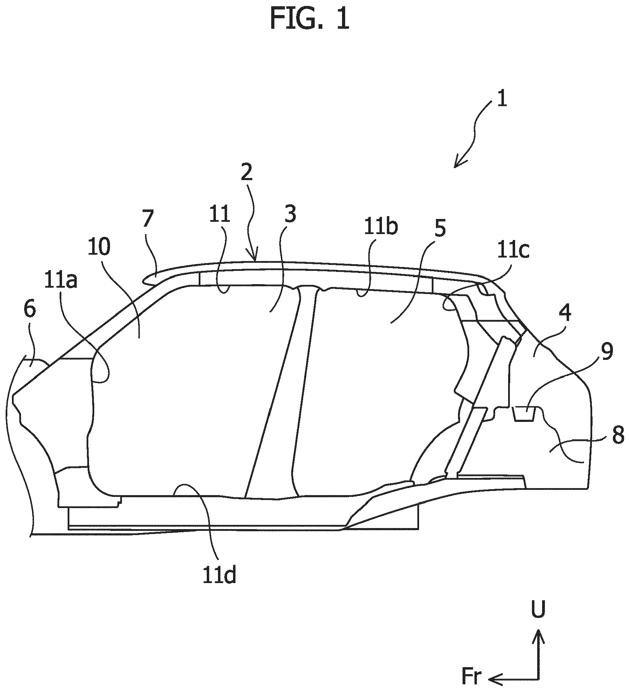

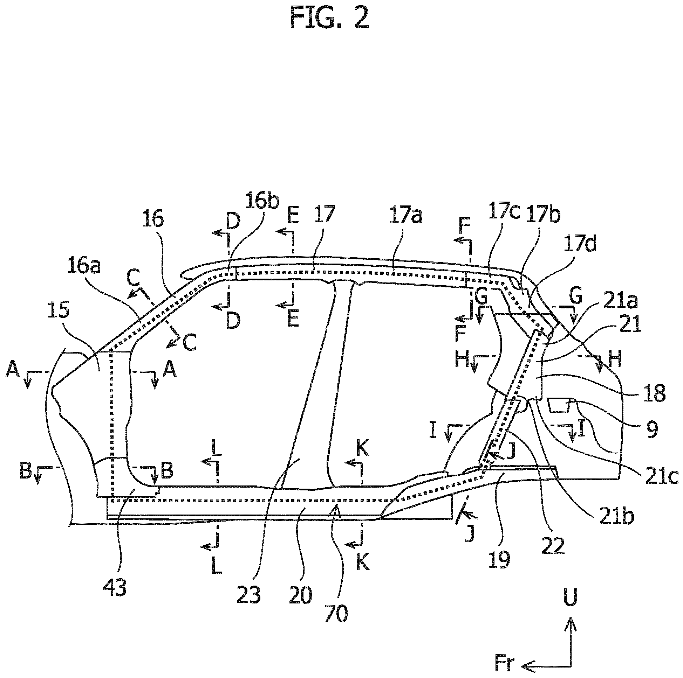

Hereinbelow, an embodiment of the present invention will be described in detail with reference to the drawings. Figures 1 and 2 are diagrams showing a part of a vehicle side portion 2 on the right side of a vehicle 1 according to an embodiment of the present invention from the inside. The vehicle 1 according to the present embodiment is a motor vehicle including an engine compartment (not shown) in which an engine (not shown) is disposed at the front of the vehicle 1 and a cabin 5 including an occupant room 3 where an occupant gets in or out rearward of the engine compartment and a luggage space 4 rearward of the occupant room 3. Hereinbelow, in the drawings, the direction of arrow Fr is defined as the front side in a front-rear direction of the vehicle 1 (hereinbelow, referred to as the front-rear direction), the direction of arrow R is defined as the right side in a vehicle width direction of the vehicle 1 (hereinbelow, referred to as the vehicle width direction), the direction of arrow U is defined as the upper side in an up-down direction of the vehicle 1 (hereinbelow, referred to as the up-down direction) for description. In addition, the vehicle 1 has a symmetrical structure, and the vehicle side portion 2 on the right side will thus be mainly described below unless otherwise specifically explained. In addition, unless otherwise specified, "inner side in the vehicle width direction" or "cabin inner side" indicates the interior side of the cabin 5, and "outer side in the vehicle width direction" or "cabin outer side" indicates the exterior side of the cabin 5.

Figure 1 is a diagram showing a part of the vehicle side portion 2 on the right side of the vehicle 1 according to the embodiment of the present invention, the part corresponding to the cabin 5, from the inner side in the vehicle width direction.

The vehicle 1 includes a vehicle body 6 made of steel. The vehicle body 6 includes left and right vehicle side portions 2 constituting left and right side portions of the vehicle body 6, a roof portion 7 that is disposed between the left and right vehicle side portions 2 and constitutes an upper portion of the vehicle body 6, and a back door (not shown) extending rearward and downward from the rear end of the roof portion 7. The cabin 5 including the occupant room 3 and the luggage space 4 is surrounded by the left and right vehicle side portions 2, the roof portion 7, and the back door.

The vehicle body 6 includes a rear suspension (not shown) disposed at the rear side in the front-rear direction and the left and right sides in the vehicle width direction. The rear suspension extends and contracts in response to irregularities on a road surface to reduce up and down movements of the vehicle body 6. The vehicle side portion 2 includes a rear wheel house 8 that is disposed at the rear side in the front-rear direction and covers a rear wheel of the vehicle 1, and a rear suspension holding portion 9 is formed in an upper portion of the rear wheel house 8. The rear suspension holding portion 9 holds the upper end of the rear suspension (not shown).

Next, a vehicle body side structure, which is the structure of the vehicle side portion 2 of the vehicle 1, will be described with reference to Figures 1 and 2. The vehicle side portion 2 is provided with a door opening 10 for an occupant to get in and out, and the door opening 10 is opened and closed by a side door (not shown). The door opening 10 is disposed closer to the front of the cabin 5 corresponding to the occupant room 3. The outer periphery of the door opening 10 is constituted of a peripheral edge portion 11, and the peripheral edge portion 11 includes a front peripheral edge portion 11a disposed at the front side of the door opening 10, an upper peripheral edge portion 11b disposed at the upper side of the door opening 10, a rear peripheral edge portion 11c disposed at the rear side of the door opening 10, and a lower peripheral edge portion 11d disposed at the lower side of the door opening 10. The rear suspension holding portion 9 is disposed at a distance rearward from the rear peripheral edge portion 11c.

Next, a specific structure of the vehicle side portion 2 will be described with reference to Figure 2. The vehicle side portion 2 includes a hinge pillar 15 that constitutes a part of the front peripheral edge portion 11a of the door opening 10 and extends in the vehicle up-down direction, a front pillar 16 that constitutes a part of the front peripheral edge portion 11a of the door opening 10 and extends upward and rearward from the upper end of the hinge pillar 15, a roof side rail 17 that constitutes the upper peripheral edge portion 11b of the door opening 10 and extends rearward from the upper end of the front pillar 16, a rear pillar 18 that extends downward from the rear end of the roof side rail 17 at a distance rearward from the rear peripheral edge portion 11c of the door opening 10, a rear side member 19 that extends forward from the lower end of the rear pillar 18 at a distance downward from the lower peripheral edge portion 11d of the door opening, and a side sill 20 that constitutes the lower peripheral edge portion 11d of the door opening 10 and extends from the front end of the rear side member 19 to the lower end of the hinge pillar 15. The hinge pillar 15, the front pillar 16, the roof side rail 17, the rear pillar 18, the rear side member 19, and the side sill 20 are constituent members included in the vehicle body 6. The rear pillar 18 includes a quarter pillar 21 disposed on the upper side and a rear wheel house reinforcement 22 disposed on the lower side. The lower end side of the quarter pillar 21 and the upper end side of the rear wheel house reinforcement 22 are joined in such a manner that the quarter pillar 21 and the rear wheel house reinforcement 22 form a straight line when viewed in the vehicle width direction. Note that the side sill 20 is the side lower reinforcing member in the present invention.

The hinge pillar 15, the front pillar 16, the roof side rail 17, the rear pillar 18, the rear side member 19, and the side sill 20 are jointed to each other in the order of the hinge pillar 15, the front pillar 16, the roof side rail 17, the rear pillar 18, the rear side member 19, and the side sill 20 to constitute a side annular vehicle body frame 70 having an annular shape when viewed in the vehicle width direction. Specifically, the upper end of the hinge pillar 15 is jointed to the lower end of the front pillar 16. The upper end of the front pillar 16 is jointed to the front end of the roof side rail 17. The rear end of the roof side rail 17 is jointed to the upper end of the rear pillar 18. The lower end of the rear pillar 18 is jointed to the upper face of the rear side member 19 at the rear end side of the rear side member 19. The front end of the rear side member 19 is connected to the rear end of the side sill 20. The front end of the side sill 20 is connected to the lower end of the hinge pillar 15. A broken line in Figure 2 shows the side annular vehicle body frame 70. The side annular vehicle body frame 70 improves the rigidity of the vehicle body 6 and reduces space deformation of the cabin 5. Note that, hereinbelow, the hinge pillar 15, the front pillar 16, the roof side rail 17, the rear pillar 18, the rear side member 19, and the side sill 20 may be collectively referred to as frame members.

The front pillar 16 is formed in an L shape including a front pillar inclined portion 16a extending upward and rearward and a front pillar horizontal portion 16b extending in the front-rear direction when viewed from the inner side in the vehicle width direction. The roof side rail 17 includes a roof side rail horizontal portion 17a extending in the front-rear direction and an L-shaped roof side rail extension 17b disposed on the rear side of the roof side rail horizontal portion 17a when viewed from the inner side in the vehicle width direction. The L-shaped roof side rail extension 17b includes a rail extension horizontal portion 17c extending in the front-rear direction and a rail extension inclined portion 17d obliquely extending rearward and downward. The quarter pillar 21 includes a quarter pillar upper end portion 21a joined to the rail extension inclined portion 17d, a quarter pillar lower end portion 21b joined to the rear wheel house reinforcement 22, and a rear suspension coupling portion 21c that is disposed on the rear side of the quarter pillar lower end portion 21b and has a lower end coupled to the rear suspension holding portion 9 when viewed from the inner side in the vehicle width direction. The quarter pillar 21 supports the rear suspension holding portion 9.

A center pillar 23 extending in the up-down direction is provided between the roof side rail 17 and the side sill 20 on the center in the front-rear direction of the side annular vehicle body frame 70. As will be described in detail further below, the upper end of the center pillar 23 is joined to the center in the front-rear direction of the roof side rail 17 of the side annular vehicle body frame 70, and the lower end of the center pillar 23 is joined to the center in the front-rear direction of the side sill 20 of the side annular vehicle body frame 70. Note that the center pillar 23 may not be provided because the center pillar 23 is not an essential element of the side annular vehicle body frame 70.

In each of the frame members constituting the side annular vehicle body frame 70, the frame members including the hinge pillar 15, the front pillar 16, the roof side rail 17, the rear pillar 18, the rear side member 19, and the side sill 20, a cross section perpendicular to the longitudinal direction of each frame member (hereinbelow, referred to as the cross section of each frame member) is formed as a hollow closed cross section. In addition, a cross section perpendicular to an annularly extending direction (hereinbelow, referred to as the annular direction) of the side annular vehicle body frame 70 in which the frame members are joined to form an annular shape is formed as a hollow closed cross section also at joining portions between the frame members. Thus, the cross section perpendicular to the annular direction of the side annular vehicle body frame 70 in which the frame members are joined to form an annular shape is formed as a hollow closed cross section at any position on the side annular vehicle body frame 70 in the annular direction. Hereinbelow, "closed cross section" refers to a hollow closed cross section.

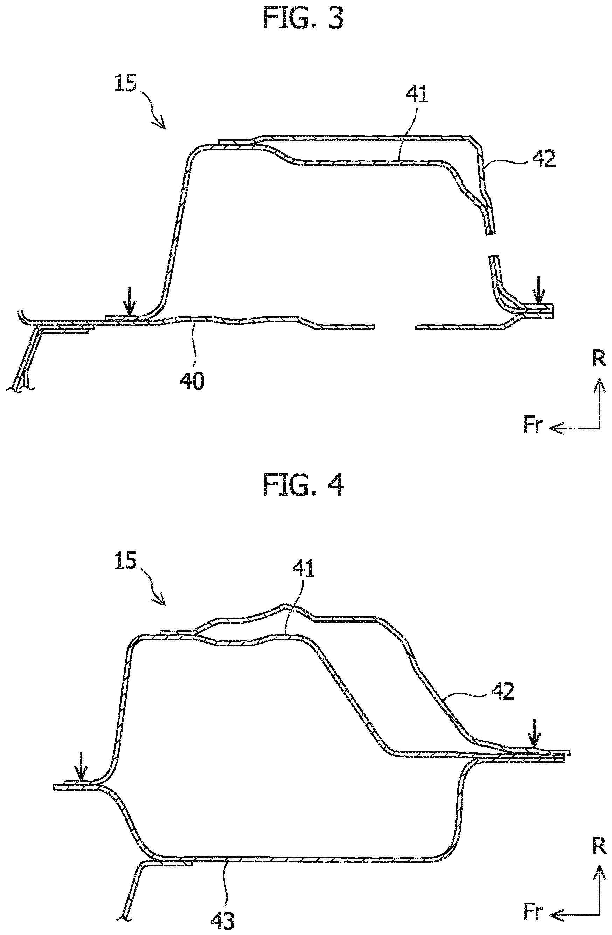

Next, the cross section of each frame member will be described with reference to Figures 3 to 14. Figure 3 shows a cross section of the hinge pillar 15 on the upper side, which is a cross section on arrows A-A of Figure 2. The upper side of the hinge pillar 15 includes a dash side panel 40 having a flat cross section, and a front door hinge reinforcement 41 that projects outward in the vehicle width direction and has a hat-shaped cross section. The hinge pillar 15 has a closed cross section extending in the up-down direction, the closed cross section being formed by joining the front door hinge reinforcement 41 located on the outer side in the vehicle width direction to the dash side panel 40 located on the inner side in the vehicle width direction at both flange portions (both flange portions refer to flange portions on both sides of a member formed in a hat shape, the same applies hereinafter) by spot welding (indicated by arrows in Figure 3). The closed cross section of the hinge pillar 15 has a substantially quadrangular shape that has corners forming the closed cross section, each of the corners being formed as an outside corner projecting outward, and has no inside corner recessed inward. In addition, a side body outer panel 42 having a substantially L shape is joined to the outer side in the vehicle width direction of the front door hinge reinforcement 41 by spot welding. Note that the dash side panel 40 is formed in a flat shape in the middle in the up-down direction and projects inward in the vehicle width direction at the upper and lower end sides in the up-down direction so that the cross section is formed in a hat shape.

Figure 4 shows a cross section of the hinge pillar 15 on the lower side, which is a cross section on arrows B-B of Figure 2. The lower side of the hinge pillar 15 includes a front door hinge reinforcement 41 that projects outward in the vehicle width direction and has a hat-shaped cross section, and a dash side lower panel 43 that projects inward in the vehicle width direction and has a hat-shaped cross section. The lower side of the hinge pillar 15 has a closed cross section extending in the up-down direction, the closed cross section being formed by joining the front door hinge reinforcement 41 located on the outer side in the vehicle width direction to the dash side lower panel 43 located on the inner side in the vehicle width direction at both flange portions by spot welding (indicated by arrows in Figure 4). The closed cross section of the lower side of the hinge pillar 15 has a substantially quadrangular shape that has corners forming the closed cross section, each of the corners being formed as an outside corner projecting outward, and has no inside corner recessed inward. In addition, the side body outer panel 42 having a substantially L shape is joined to the outer side in the vehicle width direction of the front door hinge reinforcement 41 by spot welding. The upper side and the lower side of the hinge pillar 15 have the front door hinge reinforcement 41 located on the outer side in the vehicle width direction in common.

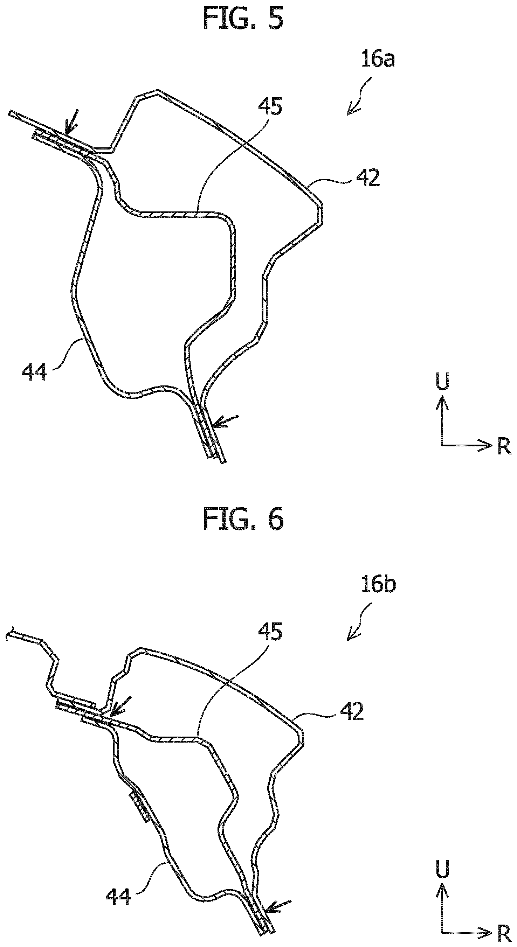

Figure 5 shows a cross section of the front pillar inclined portion 16a of the front pillar 16, which is a cross section on arrows C-C of Figure 2. Figure 6 shows a cross section of the front pillar horizontal portion 16b of the front pillar 16, which is a cross section on arrows D-D of Figure 2. The front pillar inclined portion 16a and the front pillar horizontal portion 16b of the front pillar 16 both include a front pillar upper reinforcement 45 that projects outward in the vehicle width direction and has a hat-shaped cross section, and a front pillar inner panel 44 that projects inward in the vehicle width direction and has a hat-shaped cross section. The front pillar inclined portion 16a of the front pillar 16 has a closed cross section extending in the up-down direction, the closed cross section being formed by joining the front pillar upper reinforcement 45 located on the outer side in the vehicle width direction to the front pillar inner panel 44 located on the inner side in the vehicle width direction at both flange portions by spot welding (indicated by arrows in Figure 5). The front pillar horizontal portion 16b of the front pillar 16 has a closed cross section extending in the front-rear direction, the closed cross section being formed by joining the front pillar upper reinforcement 45 located on the outer side in the vehicle width direction to the front pillar inner panel 44 located on the inner side in the vehicle width direction at both flange portions by spot welding (indicated by arrows in Figure 6). The closed cross sections of the front pillar inclined portion 16a and the front pillar horizontal portion 16b have a substantially quadrangular shape that has corners forming the closed cross section, each of the corners being formed as an outside corner projecting outward, and has no inside corner recessed inward. In addition, the side body outer panel 42 formed in a substantially hat shape is joined to the outer side in the vehicle width direction of the front pillar upper reinforcement 45 by spot welding.

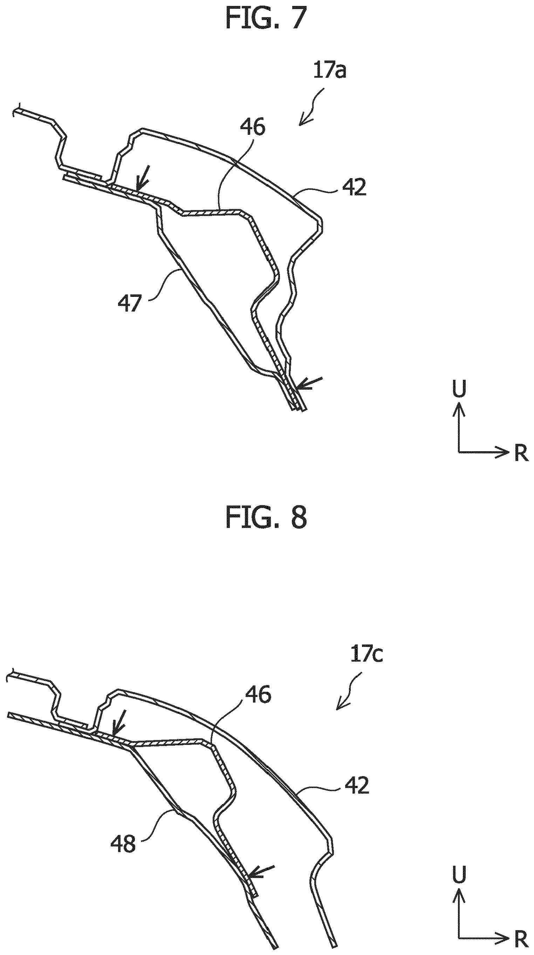

Figure 7 shows a cross section of the roof side rail horizontal portion 17a in the roof side rail 17, which is a cross section on arrows E-E of Figure 2. The roof side rail horizontal portion 17a includes a roof side reinforcement 46 that projects outward in the vehicle width direction and has a hat-shaped cross section, and a roof side rail inner 47 that projects inward in the vehicle width direction and has a hat-shaped cross section. The roof side rail horizontal portion 17a has a closed cross section extending in the front-rear direction, the closed cross section being formed by joining the roof side reinforcement 46 located on the outer side in the vehicle width direction to the roof side rail inner 47 located on the inner side in the vehicle width direction at both flange portions by spot welding (indicated by arrows in Figure 7). The closed cross section of the roof side rail horizontal portion 17a has a substantially quadrangular shape that has corners forming the closed cross section, each of the corners being formed as an outside corner projecting outward, and has no inside corner recessed inward. In addition, the side body outer panel 42 formed in a substantially hat shape is joined to the outer side in the vehicle width direction of the roof side reinforcement 46 by spot welding.

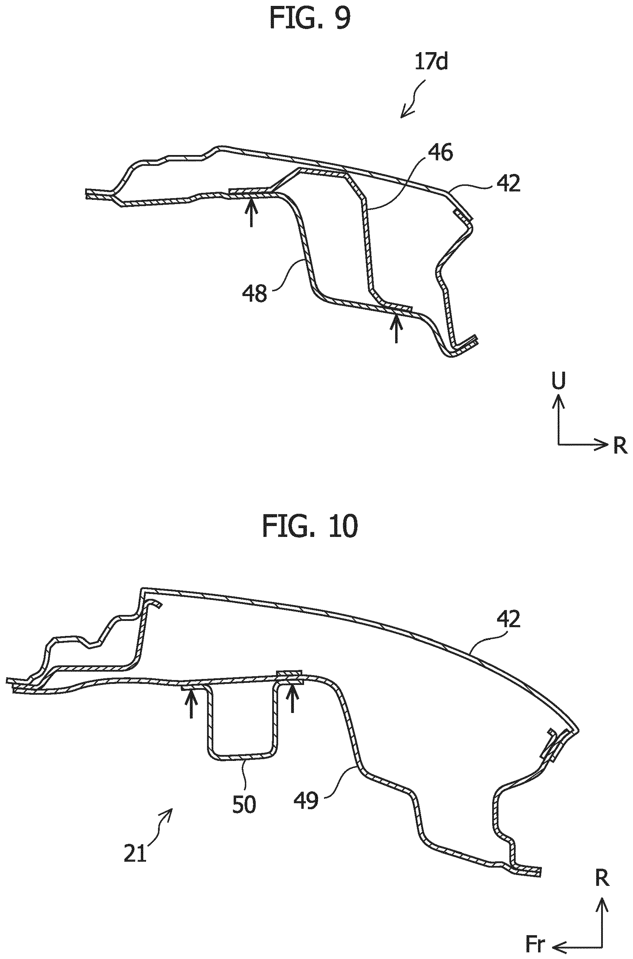

Figure 8 shows a cross section of the rail extension horizontal portion 17c in the roof side rail extension 17b of the roof side rail 17, which is a cross section on arrows F-F of Figure 2. Figure 9 shows a cross section of the rail extension inclined portion 17d in the roof side rail extension 17b of the roof side rail 17, which is a cross section on arrows G-G of Figure 2. The rail extension horizontal portion 17c and the rail extension inclined portion 17d both include the roof side reinforcement 46 that projects outward in the vehicle width direction and has a hat-shaped cross section, and a quarter inner upper extension 48 that projects inward in the vehicle width direction and has a hat-shaped cross section. The rail extension horizontal portion 17c has a closed cross section extending in the front-rear direction, the closed cross section being formed by joining the roof side reinforcement 46 located on the outer side in the vehicle width direction to the quarter inner upper extension 48 located on the inner side in the vehicle width direction at both flange portions by spot welding (indicated by arrows in Figure 8). The rail extension inclined portion 17d has a closed cross section extending in the up-down direction, the closed cross section being formed by joining the quarter inner upper extension 48 located on the inner side in the vehicle width direction to the roof side reinforcement 46 located on the outer side in the vehicle width direction at both flange portions by spot welding (indicated by arrows in Figure 9). The closed cross sections of the rail extension horizontal portion 17c and the rail extension inclined portion 17d have a substantially quadrangular shape that has corners forming the closed cross section, each of the corners being formed as an outside corner projecting outward, and has no inside corner recessed inward. In addition, the side body outer panel 42 formed in a substantially hat shape is joined to the outer side in the vehicle width direction of the roof side reinforcement 46 by spot welding. The rail extension horizontal portion 17c and the rail extension inclined portion 17d have the same closed cross section and have an integral structure.

There is a commonality in that the roof side rail horizontal portion 17a includes the roof side reinforcement 46 located on the outer side in the vehicle width direction and the rail extension horizontal portion 17c and the rail extension inclined portion 17d also include the roof side reinforcement 46 located on the outer side in the vehicle width direction. On the other hand, there is a difference in that the roof side rail horizontal portion 17a includes the roof side rail inner 47 located on the inner side in the vehicle width direction and the rail extension horizontal portion 17c and the rail extension inclined portion 17d include the quarter inner upper extension 48 located on the inner side in the vehicle width direction.

A joining structure between the roof side rail inner 47 of the roof side rail horizontal portion 17a and the quarter inner upper extension 48 of the rail extension horizontal portion 17c is as follows. The hat-shaped roof side rail inner 47 and the hat-shaped quarter inner upper extension 48 overlap, and both flange portions of the roof side rail inner 47 and both flange portions of the quarter inner upper extension 48 are joined to both flange portions of the hat-shaped roof side reinforcement 46 by spot welding.

As described above, in the joining structure between the roof side rail inner 47 and the quarter inner upper extension 48, the roof side rail inner 47 and the quarter inner upper extension 48 are not butt-joined but joined in an overlapping manner. Thus, the cross section perpendicular to the annular direction of the side annular vehicle body frame 70 in which the frame members are joined to form an annular shape is formed as a hollow closed cross section also in the joining structure between the roof side rail inner 47 and the quarter inner upper extension 48.

Figure 10 shows a cross section of the quarter pillar 21 in the rear pillar 18, which is a cross section on arrows H-H of Figure 2. The quarter pillar 21 includes a flat portion of a quarter inner upper panel 49, and a quarter panel inner reinforcement 50 that projects inward in the vehicle width direction and has a hat-shaped cross section. The quarter pillar 21 has a closed cross section extending in the up-down direction, the closed cross section being formed by joining the quarter panel inner reinforcement 50 located on the inner side in the vehicle width direction to the quarter inner upper panel 49 located on the outer side in the vehicle width direction at both flange portions by spot welding (indicated by arrows in Figure 10). The closed cross section of the quarter pillar 21 has a substantially quadrangular shape that has corners forming the closed cross section, each of the corners being formed as an outside corner projecting outward, and has no inside corner recessed inward. In addition, the side body outer panel 42 having a substantially hat shape is joined to the outer side in the vehicle width direction of the quarter inner upper panel 49 by spot welding in the vehicle up-down direction.

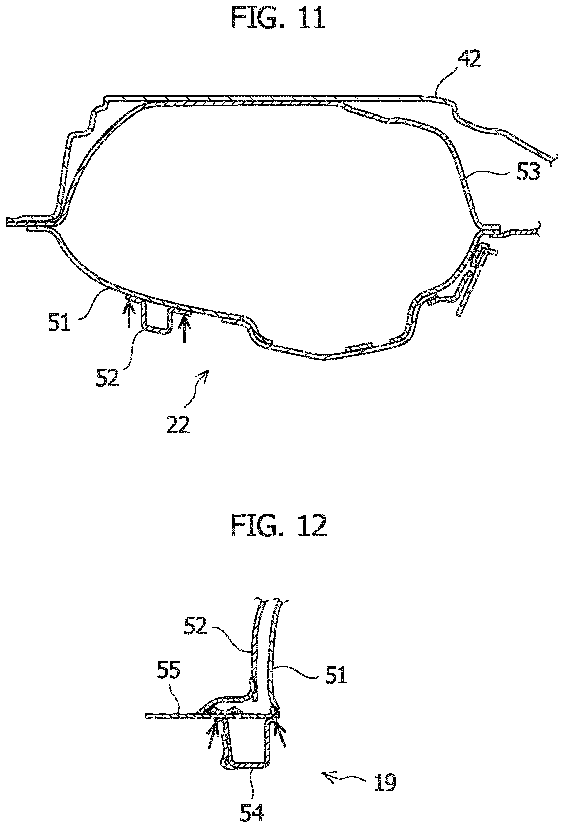

Figure 11 shows a cross section of the rear wheel house reinforcement 22 in the rear pillar 18, which is a cross section on arrows I-I of Figure 2. The rear wheel house reinforcement 22 includes a flat portion of a wheel house inner panel 51, and a wheel house reinforcement 52 that projects inward in the vehicle width direction and has a hat-shaped cross section. The rear wheel house reinforcement 22 has a closed cross section extending in the up-down direction, the closed cross section being formed by joining the wheel house reinforcement 52 located on the inner side in the vehicle width direction to the wheel house inner panel 51 located on the outer side in the vehicle width direction at both flange portions by spot welding (indicated by arrows in Figure 11). The closed cross section of the rear wheel house reinforcement 22 has a substantially quadrangular shape that has corners forming the closed cross section, each of the corners being formed as an outside corner projecting outward, and has no inside corner recessed inward. In addition, a wheel house outer panel 53 having a projecting shape is joined to the outer side in the vehicle width direction of the wheel house inner panel 51 by spot welding in the vehicle up-down direction.

Figure 12 shows a cross section of the rear side member 19, which is a cross section on arrows J-J of Figure 2. The rear side member 19 includes a rear floor side member 54 that projects to the cabin outer side (the lower side in the up-down direction) and has a hat-shaped cross section, and a flat portion of a rear floor rear panel 55. The rear side member 19 has a closed cross section extending in the front-rear direction, the closed cross section being formed by joining the rear floor side member 54 located on the cabin outer side to the rear floor rear panel 55 located on the cabin inner side at both flange portions by spot welding (indicated by arrows in Figure 12). The closed cross section of the rear side member 19 has a substantially quadrangular shape that has corners forming the closed cross section, each of the corners being formed as an outside corner projecting outward, and has no inside corner recessed inward.

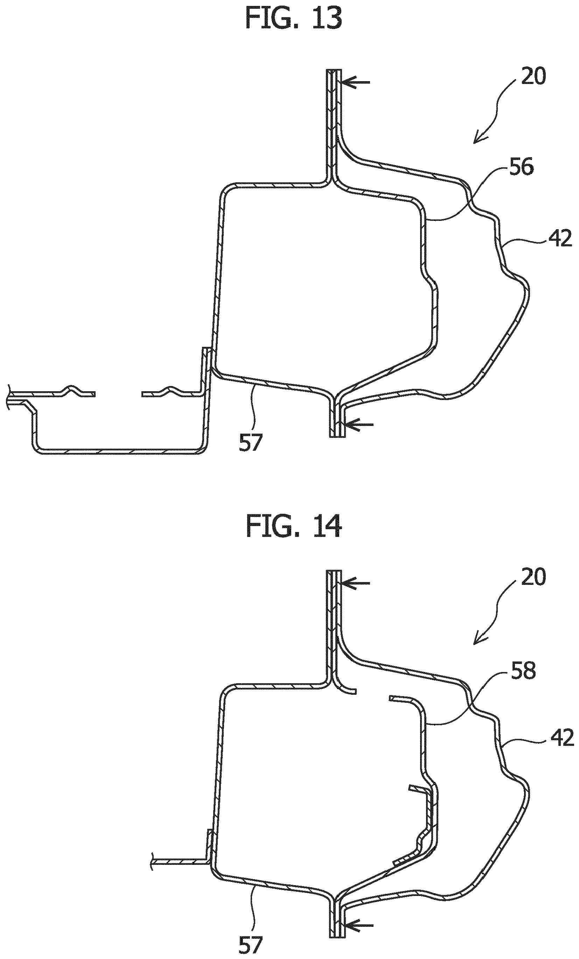

Figure 13 shows a cross section of the side sill 20 on the rear side in the front-rear direction, which is a cross section on arrows K-K of Figure 2. The side sill 20 includes a side sill rear outer panel 56 that projects outward in the vehicle width direction and has a hat-shaped cross section, and a side sill inner panel 57 that projects inward in the vehicle width direction and has a hat-shaped cross section. The side sill 20 has a closed cross section extending in the front-rear direction, the closed cross section being formed by joining the side sill rear outer panel 56 located on the outer side in the vehicle width direction to the side sill inner panel 57 located on the inner side in the vehicle width direction at both flange portions by spot welding (indicated by arrows in Figure 13). The closed cross section of the side sill 20 has a substantially quadrangular shape that has corners forming the closed cross section, each of the corners being formed as an outside corner projecting outward, and has no inside corner recessed inward. In addition, the side body outer panel 42 formed in a substantially hat shape is joined to the outer side in the vehicle width direction of the side sill 20 by spot welding.

Figure 14 shows a cross section of the side sill 20 on the front side in the front-rear direction, which is a cross section on arrows L-L of Figure 2. The side sill 20 includes a side sill outer panel 58 that projects outward in the vehicle width direction and has a hat-shaped cross section, and the side sill inner panel 57 that projects inward in the vehicle width direction and has a hat-shaped cross section. The side sill 20 has a closed cross section extending in the front-rear direction, the closed cross section being formed by joining the side sill outer panel 58 located on the outer side in the vehicle width direction to the side sill inner panel 57 located on the inner side in the vehicle width direction at both flange portions by spot welding (indicated by arrows in Figure 14). The closed cross section of the side sill 20 has a substantially quadrangular shape that has corners forming the closed cross section, each of the corners being formed as an outside corner projecting outward, and has no inside corner recessed inward. In addition, the side body outer panel 42 formed in a substantially hat shape is joined to the outer side in the vehicle width direction of the side sill 20 by spot welding.

There is a commonality in the inner side in the vehicle width direction between the front side and the rear side of the side sill 20 in that the side sill inner panel 57 is located on the inner side in the vehicle width direction. On the other hand, there is a difference in the outer side in the vehicle width direction between the front side and the rear side of the side sill 20 in that the front side of the side sill 20 includes the side sill outer panel 58 located on the outer side in the vehicle width direction and the rear side of the side sill 20 includes the side sill rear outer panel 56 located on the outer side in the vehicle width direction.

A joining structure between the side sill outer panel 58 and the side sill rear outer panel 56 of the side sill 20 is as follows. The hat-shaped side sill outer panel 58 and the hat-shaped side sill rear outer panel 56 overlap, and both flange portions of the side sill outer panel 58 and both flange portions of the side sill rear outer panel 56 are joined to both flange portions of the hat-shaped side sill inner panel 57 by spot welding.

As described above, in the joining structure between the side sill outer panel 58 and the side sill rear outer panel 56, the side sill outer panel 58 and the side sill rear outer panel 56 are not butt-joined but joined in an overlapping manner. Thus, the cross section perpendicular to the annular direction of the side annular vehicle body frame 70 in which the frame members are joined to form an annular shape is formed as a hollow closed cross section also in the joining structure between the side sill outer panel 58 and the side sill rear outer panel 56.

As described above, each of the frame members constituting the side annular vehicle body frame 70, the frame members including the hinge pillar 15, the front pillar 16, the roof side rail 17, the rear pillar 18, the rear side member 19, and the side sill 20, includes two members, and at least one of the two members is formed in a hat shape. In each frame member, one member formed in a hat shape and the other member are joined by spot welding at both flange portions of the one member formed in a hat shape to form the cross section perpendicular to the longitudinal direction of each frame member into a closed cross section. Note that, although each frame member includes two members in the present embodiment, this is not a limitation. Each frame member may include three or more members as long as the cross section perpendicular to the longitudinal direction of each frame member is formed as a closed cross section. Alternatively, the ends of a so-called seamless member or a single member may be joined to form the cross section perpendicular to the longitudinal direction into a closed cross section.

Next, the joining structure between the frame members constituting the side annular vehicle body frame 70, the frame members including the hinge pillar 15, the front pillar 16, the roof side rail 17, the rear pillar 18, the rear side member 19, and the side sill 20, will be described.

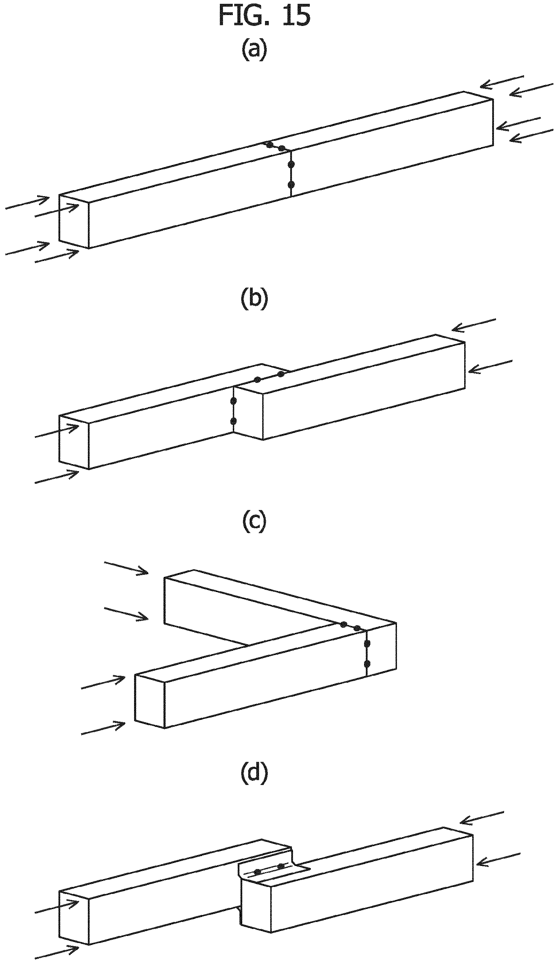

Figures 15(a) to (d) are diagrams for simply explaining edge lines extending in the longitudinal direction of each frame member at the joining portion between the frame members of the present embodiment in which Figure 15(a) is a case in which the joining between the two frame members is coaxial joining, Figure 15(b) is a case in which the joining between the two frame members is adjacent joining, Figure 15(c) is a case in which the joining between the two frame members is corner joining, and Figure 15(d) is a case in which the joining between the two frame members is stepped joining. Note that filled circles in Figures 15(a) to (d) indicate spot welding locations.

In the present embodiment, edge lines in the annular direction (the longitudinal direction of each frame member) of the side annular vehicle body frame 70 whose cross section perpendicular to the annular direction is formed as a quadrangular closed cross section are continuous at the joining portion between the frame members. Here, "the edge lines in the annular direction being continuous at the joining portion between the frame members" refers to, for example, the cases of the joining shown in Figures 15(a), (b), and (c). Figure 15(a) is the case of coaxial joining in which one member and the other member each having a quadrangular cross section are coaxially joined and four edge lines indicated by arrows are continuous at the joining portion. Figure 15(b) is the case of adjacent joining in which one member and the other member each having a quadrangular cross section are adjacently joined and two adjacent edge lines indicated by arrows are continuous at the joining portion. Figure 15(c) is the case of corner joining in which one member and the other member each having a quadrangular cross section are joined at the right angle and two adjacent edge lines indicated by arrows are continuous at the joining portion. On the other hand, Figure 15(d) is the case of stepped joining in which, although the cross section perpendicular to the longitudinal direction of each of one member and the other member is formed as a closed cross section at the joining portion, edge lines of the one member and the other member are not continuous at the joining portion. The joining area at the joining portion can be made larger in the case in which at least two adjacent edge lines of the two members are continuous at the joining portion as shown in Figures 15(a), (b), and (c) than in the case shown in Figure 15(d) in which edge lines of the two members are not continuous at the joining portion. As a result, it is possible to increase the entire welding length or increase the overall number of welding points and thus possible to increase the rigidity at the joining portion between the members.

Figures 16(a) to (c) simply show a joining structure between the front pillar horizontal portion 16b of the front pillar 16 and the roof side rail horizontal portion 17a. Figure 16(a) is a diagram viewed from a direction in which the joining portion between the front pillar horizontal portion 16b and the roof side rail horizontal portion 17a is visible (in this figure, the upper side in the up-down direction) on the outer side and the inner side in the vehicle width direction, Figure 16(b) is an enlarged view showing a cross section of a portion enclosed by a dashed circle of Figure 16(a), and Figure 16(c) is a sectional view on arrows M-M of Figure 16(b). As shown in Figure 16(a), in the front pillar horizontal portion 16b, the rear end of the hat-shaped front pillar inner panel 44 located on the inner side in the vehicle width direction extends rearward in the front-rear direction of the vehicle relative to the rear end of the hat-shaped front pillar upper reinforcement 45 located on the outer side in the vehicle width direction. On the other hand, in the roof side rail horizontal portion 17a, the front end of the hat-shaped roof side reinforcement 46 located on the outer side in the vehicle width direction extends forward in the front-rear direction of the vehicle relative to the front end of the hat-shaped roof side rail inner 47 located on the inner side relative to the vehicle width direction. The rear end of the front pillar inner panel 44, the rear end extending rearward in the vehicle front-rear direction relative to the front pillar upper reinforcement 45, is joined to the roof side reinforcement 46 having the front end extending forward in the vehicle front-rear direction relative to the front end of the roof side rail inner 47 by spot welding at multiple points, so that the front pillar horizontal portion 16b and the roof side rail horizontal portion 17a are joined in a so-called shiplap state.

As shown in Figure 16(b) and Figure 16(c), the hat-shaped front pillar upper reinforcement 45 located on the outer side in the vehicle width direction and the hat-shaped roof side reinforcement 46 located on the outer side in the vehicle width direction overlap, and both flange portions of the front pillar upper reinforcement 45 and both flange portions of the roof side reinforcement 46 are joined to both flange portions of the hat-shaped front pillar inner panel 44 by spot welding. Similarly, although not shown, the hat-shaped front pillar inner panel 44 located on the inner side in the vehicle width direction and the hat-shaped roof side rail inner 47 located on the inner side in the vehicle width direction overlap, and both flange portions of the front pillar inner panel 44 and both flange portions of the roof side rail inner 47 are joined to both flange portions of the hat-shaped roof side reinforcement 46 by spot welding.

Since, in the joining structure between the front pillar horizontal portion 16b and the roof side rail horizontal portion 17a, the members are not butt-joined but joined in an overlapping manner as described above, the cross section perpendicular to the annular direction of the side annular vehicle body frame 70 in which the frame members are joined to form an annular shape is formed as a hollow closed cross section also at the joining portion between the front pillar horizontal portion 16b and the roof side rail horizontal portion 17a.

In addition, at the joining portion between the front pillar horizontal portion 16b and the roof side rail horizontal portion 17a, as with the joining simply shown in Figure 15(a), the front pillar horizontal portion 16b and the roof side rail horizontal portion 17a are joined in such a manner that four edge lines of the front pillar horizontal portion 16b having a substantially quadrangular closed cross section and four edge lines of the roof side rail horizontal portion 17a having a substantially quadrangular closed cross section are continuous.

Next, a joining structure between the roof side rail horizontal portion 17a and the rail extension horizontal portion 17c in the roof side rail extension 17b will be described. As shown in Figures 7 and 8, the member located on the outer side in the vehicle width direction of the roof side rail horizontal portion 17a is the roof side reinforcement 46 and the member located on the outer side in the vehicle width direction of the rail extension horizontal portion 17c in the roof side rail extension 17b is also the roof side reinforcement 46, that is, the roof side reinforcement 46 is included in common. Although not shown, as with the structure shown in Figure 16(b) and Figure 16(c), the hat-shaped roof side rail inner 47 located on the inner side in the vehicle width direction of the roof side rail horizontal portion 17a and the hat-shaped quarter inner upper extension 48 located on the inner side in the vehicle width direction of the rail extension horizontal portion 17c in the roof side rail extension 17b overlap, and both flange portions of the roof side rail inner 47 and both flange portions of the quarter inner upper extension 48 are joined to both flange portions of the hat-shaped roof side reinforcement 46 by spot welding.

Since, in the joining structure between the roof side rail horizontal portion 17a and the rail extension horizontal portion 17c, the members are not butt-joined but joined in an overlapping manner as described above, the cross section perpendicular to the annular direction of the side annular vehicle body frame 70 in which the frame members are joined to form an annular shape is formed as a hollow closed cross section also at the joining portion between the roof side rail horizontal portion 17a and the rail extension horizontal portion 17c.

In addition, at the joining portion between the roof side rail horizontal portion 17a and the rail extension horizontal portion 17c, as with the joining simply shown in Figure 15(a), the roof side rail horizontal portion 17a and the rail extension horizontal portion 17c are joined in such a manner that four edge lines of the roof side rail horizontal portion 17a having a substantially quadrangular closed cross section and four edge lines of the rail extension horizontal portion 17c having a substantially quadrangular closed cross section are continuous.

Figure 17(a) and Figure 17(b) show a joining structure between the rail extension inclined portion 17d in the roof side rail extension 17b and the quarter pillar 21. Figure 17(a) is a diagram of the rear side of the cabin 5 viewed from the indoor side, and Figure 17(b) is an enlarged view of a portion enclosed by a dashed circle of Figure 17(a). The quarter pillar 21 is located on the cabin inner side relative to the quarter inner upper panel 49 as shown in Figure 17(a), and the rail extension inclined portion 17d is located on the cabin outer side relative to the quarter inner upper panel 49 as indicated by a broken line of Figure 17(b). In the rail extension inclined portion 17d, both flange portions of the hat-shaped roof side reinforcement 46 are joined to the quarter inner upper panel 49 projecting to the indoor side of the cabin 5 by spot welding in an area of the joining portion with the quarter pillar 21 to form a closed cross section obliquely extending rearward and downward. That is, the quarter inner upper panel 49 (refer to Figure 10) constituting an outer side face in the vehicle width direction (cabin outer side face) of the quarter pillar 21 constitutes a cabin inner side face of the rail extension inclined portion 17d. Note that the end face of the rail extension inclined portion 17d is blocked by an end plate A61. In a quarter pillar upper end portion 21a of the quarter pillar 21, both flange portions of the hat-shaped quarter panel inner reinforcement 50 are bent outward and a web portion is extended. Both the bent flange portions and the extended web portion form an end flange portion 21d. The joining structure between the rail extension inclined portion 17d and the quarter pillar 21 is a structure in which the end flange portion 21d of the quarter pillar 21 overlaps the quarter inner upper panel 49 constituting the cabin inner side face of the rail extension inclined portion 17d, and the overlapping portions are joined by spot welding (filled circles in Figure 17(b)).

Since, in the joining structure between the rail extension inclined portion 17d and the quarter pillar 21, the rail extension inclined portion 17d and the quarter pillar 21 are not butt-joined but joined in an overlapping manner as described above, the cross section perpendicular to the annular direction of the side annular vehicle body frame 70 in which the frame members are joined to form an annular shape is formed as a hollow closed cross section also at the joining portion between the rail extension inclined portion 17d and the quarter pillar 21.

In addition, at the joining portion between the rail extension inclined portion 17d and the quarter pillar 21, as indicated by arrows of Figure 17(b), the rail extension inclined portion 17d and the quarter pillar 21 each having a substantially quadrangular closed cross section are joined in such a manner that two adjacent edge lines of the rail extension inclined portion 17d and two adjacent edge lines of the quarter pillar 21 are continuous.

Figure 18 shows a joining structure between the quarter pillar 21 and the rear wheel house reinforcement 22. The quarter pillar lower end portion 21b of the quarter pillar 21 and the upper end side of the rear wheel house reinforcement 22 are joined in such a manner that the quarter pillar 21 and the rear wheel house reinforcement 22 form a straight line when viewed in the vehicle width direction (refer to Figure 2). In the joining structure between the quarter pillar 21 and the rear wheel house reinforcement 22, as with the joining structure between the front pillar horizontal portion 16b and the roof side rail horizontal portion 17a shown in Figures 16(a) to (c), the quarter pillar 21 and the rear wheel house reinforcement 22 are joined in a shiplap state. Specifically, the wheel house inner panel 51 located on the outer side in the vehicle width direction of the rear wheel house reinforcement 22 and the quarter panel inner reinforcement 50 located on the inner side in the vehicle width direction of the quarter pillar 21 are joined. In addition, the quarter panel inner reinforcement 50 located on the inner side in the vehicle width direction of the quarter pillar 21 and the wheel house reinforcement 52 located on the inner side in the vehicle width direction of the rear wheel house reinforcement 22 overlap, and the quarter inner upper panel 49 of the quarter pillar 21 located on the outer side in the vehicle width direction and the wheel house inner panel 51 located on the outer side in the vehicle width direction of the rear wheel house reinforcement 22 overlap, and these are joined by spot welding (filled circles in Figure 18).

Since, in the joining structure between the quarter pillar 21 and the rear wheel house reinforcement 22, the quarter pillar 21 and the rear wheel house reinforcement 22 are not butt-joined but joined in an overlapping manner as described above, the cross section perpendicular to the annular direction of the side annular vehicle body frame 70 in which the frame members are joined to integrally and continuously form an annular shape is formed as a hollow closed cross section also in the joining structure between the quarter pillar 21 and the rear wheel house reinforcement 22.

In addition, at the joining portion between the quarter pillar 21 and the rear wheel house reinforcement 22, as with the joining simply shown in Figure 15(a), the quarter pillar 21 and the rear wheel house reinforcement 22 are joined in such a manner that four edge lines of the quarter pillar 21 having a substantially quadrangular closed cross section and four edge lines of the rear wheel house reinforcement 22 having a substantially quadrangular closed cross section are continuous.

Figure 19 shows a joining structure between the rear wheel house reinforcement 22 and the rear side member 19. The rear wheel house reinforcement 22 and the rear side member 19 are joined through a wheel house inner brace 62, which is an L-shaped corner member having a hat-shaped cross section. The L-shaped wheel house inner brace 62 includes a vertical leg portion 62a extending in the vehicle up-down direction, and a horizontal leg portion 62b extending inward in the vehicle width direction from the lower end of the vertical leg portion 62a. The cross section of the vertical leg portion 62a and the cross section of the horizontal leg portion 62b have a hat shape. The hat-shaped cross section of the vertical leg portion 62a is substantially the same as the hat-shaped cross section of the wheel house reinforcement 52. The length in the vehicle width direction of the horizontal leg portion 62b is substantially equal to the length in the vehicle width direction of the hat-shaped rear floor side member 54 (not shown in Figure 19) of the rear side member 19. The vertical leg portion 62a overlaps the wheel house reinforcement 52, web portions of their hat shapes are joined with a bolt, and both flange portions of their hat shapes are joined to the wheel house inner panel 51 by spot welding (filled circles in Figure 19). Both flange portions of the hat-shaped horizontal leg portion 62b are joined to the upper face of the rear side member 19 by spot welding (filled circles in Figure 19). The wheel house inner panel 51 of the rear wheel house reinforcement 22 located on the outer side in the vehicle width direction and the rear floor rear panel 55 of the rear side member 19 located on the cabin inner side overlap and are joined by spot welding.

Since, in the joining structure between the rear wheel house reinforcement 22 and the rear side member 19, the rear wheel house reinforcement 22 and the rear side member 19 are not butt-joined but joined in an overlapping manner through the wheel house inner brace 62, which is the L-shaped corner member, as described above, the cross section perpendicular to the annular direction of the side annular vehicle body frame 70 in which the frame members are joined to form an annular shape is formed as a hollow closed cross section also in the joining structure between the rear wheel house reinforcement 22 and the rear side member 19.

In addition, at the joining portion between the rear wheel house reinforcement 22 and the rear side member 19, as with the joining simply shown in Figure 15(c), the rear wheel house reinforcement 22 and the rear side member 19 are joined in such a manner that two edge lines adjacent in the vehicle width direction on the upper face side of the rear side member 19 and two edge lines adjacent in the vehicle width direction of the rear wheel house reinforcement 22 joined through the wheel house inner brace 62 are continuous.

Figure 20 shows a joining structure between the rear side member 19 and the side sill 20. In the joining structure between the rear side member 19 and the side sill 20, as with the joining simply shown in Figure 15(b), the rear side member 19 and the side sill 20 each having a quadrangular cross section are adjacently joined. Specifically, as shown in Figure 20, a face on the outer side in the vehicle width direction of the rear floor side member 54 having a hat-shaped cross section of the rear side member 19 and a face on the inner side in the vehicle width direction of the side sill rear outer panel 56 having a hat-shaped cross section of the side sill 20 are in contact with each other and joined by spot welding (indicated by arrows in Figure 20). In addition, the rear side member 19 and the side sill 20 are joined in such a manner that two edge lines adjacent in the up-down direction on the outer side in the vehicle width direction of the rear side member 19 and two edge lines adjacent in the up-down direction on the inner side in the vehicle width direction of the side sill 20 are continuous.

Figure 21 shows a joining structure between the side sill 20 and the hinge pillar 15. The hinge pillar 15 extending in the vehicle up-down direction and the side sill 20 extending in the vehicle front-rear direction are joined at the right angle when viewed in the vehicle width direction (refer to Figure 2). On the inner side in the vehicle width direction, the dash side panel 40 of the hinge pillar 15 and the side sill inner panel 57 of the side sill 20 are joined through the dash side lower panel 43 having an L shape when viewed from the inner side in the vehicle width direction. On the outer side in the vehicle width direction, the front door hinge reinforcement 41 of the hinge pillar 15 is directly joined to the side sill outer panel 58 of the side sill 20.

A lower portion of the L-shaped dash side lower panel 43 is formed in a crank shape along the upper side of the hat-shaped side sill inner panel 57 of the side sill 20. An upper portion of the L-shaped dash side lower panel 43 is formed in a hat shape along the hat-shaped dash side panel 40 of the hinge pillar 15. A lower portion of the front door hinge reinforcement 41 is formed in a crank shape along the upper side of the hat-shaped side sill outer panel 58 of the side sill 20. The lower portion of the dash side lower panel 43 overlaps the upper side of the side sill inner panel 57 and is joined to the side sill inner panel 57 by spot welding (filled circles in Figure 21). The upper portion of the dash side lower panel 43 overlaps the dash side panel 40 and is joined to the dash side panel 40 by spot welding (filled circles in Figure 21). The lower portion of the front door hinge reinforcement 41 overlaps the upper side of the side sill outer panel 58 and is joined to the side sill outer panel 58 by spot welding (filled circles in Figure 21).

As described above, in the joining structure between the side sill 20 and the hinge pillar 15, the L-shaped dash side lower panel 43 is joined to the side sill 20 and the hinge pillar 15 in an overlapping manner on the inner side in the vehicle width direction, and the front door hinge reinforcement 41 is joined to the side sill outer panel 58 in an overlapping manner on the outer side in the vehicle width direction. Thus, the cross section perpendicular to the annular direction of the side annular vehicle body frame 70 having an annular shape is formed as a hollow closed cross section at the joining portion between the side sill 20 and the hinge pillar 15.

In addition, at the joining portion between the side sill 20 and the hinge pillar 15, as with the joining simply shown in Figure 15(c), the side sill 20 and the hinge pillar 15 are joined in such a manner that two edge lines adjacent in the vehicle width direction on the upper face side of the side sill 20 and two edge lines adjacent in the vehicle width direction on the rear side of the hinge pillar 15 are continuous through the dash side lower panel 43.

Figure 22 shows a joining structure between the hinge pillar 15 and the front pillar 16. In the joining structure between the hinge pillar 15 and the front pillar 16, as with the joining structure between the front pillar horizontal portion 16b and the roof side rail horizontal portion 17a shown in Figures 16(a) to (c), the hinge pillar 15 and the front pillar 16 are joined in a shiplap state. On the upper side of the hinge pillar 15, the upper end of the hat-shaped front door hinge reinforcement 41 located on the outer side in the vehicle width direction extends upward in the vehicle up-down direction relative to the upper end of the hat-shaped dash side panel 40 located on the inner side in the vehicle width direction. On the other hand, on the lower side of the front pillar 16, the lower end of the hat-shaped front pillar inner panel 44 located on the inner side in the vehicle width direction extends downward in the vehicle up-down direction relative to the lower end of the hat-shaped front pillar upper reinforcement 45 (not shown in Figure 22) located on the outer side in the vehicle width direction. The front door hinge reinforcement 41 having the upper end extending upward in the vehicle up-down direction relative to the upper end of the dash side panel 40 is joined to the front pillar inner panel 44 having the lower end extending downward in the vehicle up-down direction relative to the lower end of the front pillar upper reinforcement 45 by spot welding at multiple points in the up-down direction (filled circles in Figures 22), so that the hinge pillar 15 and the front pillar 16 are joined in a shiplap state.

The hat-shaped front pillar upper reinforcement 45 located on the outer side in the vehicle width direction and the hat-shaped front door hinge reinforcement 41 located on the outer side in the vehicle width direction overlap, and both flange portions of the front pillar upper reinforcement 45 and both flange portions of the front door hinge reinforcement 41 are joined to both flange portions of the hat-shaped front pillar inner panel 44 by spot welding. The hat-shaped front pillar inner panel 44 located on the inner side in the vehicle width direction and the hat-shaped dash side panel 40 located on the inner side in the vehicle width direction overlap, and both flange portions of the front pillar inner panel 44 and both flange portions of the dash side panel 40 are joined to both flange portions of the hat-shaped front door hinge reinforcement 41 by spot welding (filled circles in Figures 22). In addition, a web portion of the hat-shaped dash side panel 40 and a web portion of the hat-shaped front pillar inner panel 44 are fastened with a bolt.

Since, in the joining structure between the hinge pillar 15 and the front pillar 16, the hinge pillar 15 and the front pillar 16 are not butt-joined but joined in an overlapping manner as described above, the cross section perpendicular to the annular direction of the side annular vehicle body frame 70 having an annular shape is formed as a hollow closed cross section at the joining portion between the hinge pillar 15 and the front pillar 16.

In addition, at the joining portion between the hinge pillar 15 and the front pillar 16, as with the joining simply shown in Figure 15(a), the hinge pillar 15 and the front pillar 16 are joined in such a manner that four edge lines of hinge pillar 15 having a substantially quadrangular closed cross section and four edge lines of the front pillar 16 having a substantially quadrangular closed cross section are continuous.

While, in the present embodiment, the side annular vehicle body frame 70 includes the hinge pillar 15, the front pillar 16, the roof side rail 17, the rear pillar 18, the rear side member 19, and the side sill 20 as frame members, all of the members constituting each of these frame members are not necessarily members dedicated to constitute the side annular vehicle body frame 70, and members used to constitute the vehicle body 6 for other purposes are used. Thus, the addition of new members to improve the rigidity of the vehicle body 6 and reduce space deformation of the cabin 5 can be reduced, thereby making it possible to improve the rigidity of the vehicle body 6 while reducing an increase in the weight of the vehicle body 6.

Next, a vehicle body structure of the vehicle 1 will be described with reference to Figure 23. The vehicle body structure of the vehicle 1 in the present embodiment relates to the structure of the cabin 5. The side annular vehicle body frame 70 in which the frame members described above are joined to form an annular shape is provided at each of the left and right vehicle side portions 2 of the cabin 5. Hereinbelow, the side annular vehicle body frame 70 provided at the left vehicle side portion 2 of the cabin 5 is referred to as the left side annular vehicle body frame 70, and the side annular vehicle body frame 70 provided at the right vehicle side portion 2 of the cabin 5 is referred to as the right side annular vehicle body frame 70.

The center pillar 23 extending in the vehicle up-down direction is provided between the roof side rail 17 and the side sill 20 on the center in the vehicle front-rear direction of the left side annular vehicle body frame 70. The upper end of the center pillar 23 is joined to the center in the vehicle front-rear direction of the roof side rail 17 of the left side annular vehicle body frame 70, and the lower end of the center pillar 23 is joined to the center in the front-rear direction of the side sill 20 of the left side annular vehicle body frame 70. Similarly, although not shown in the drawing, the center pillar 23 extending in the vehicle up-down direction is provided between the roof side rail 17 and the side sill 20 on the center in the vehicle front-rear direction of the right side annular vehicle body frame 70. The upper end of the center pillar 23 is connected to the center in the vehicle front-rear direction of the roof side rail 17 of the right side annular vehicle body frame 70, and the lower end of the center pillar 23 is connected to the center in the front-rear direction of the side sill 20 of the right side annular vehicle body frame 70.

Although not shown in the drawing, the center pillar 23 includes an inner member that projects inward in the vehicle width direction and has a hat-shaped cross section, and an outer member that projects outward in the vehicle width direction and has a hat-shaped cross section. An upper end portion of the inner member of the center pillar 23 overlaps, from the inner side in the vehicle width direction, the roof side rail inner 47 located on the inner side in the vehicle width direction of the roof side rail 17 and is joined thereto by spot welding at multiple points. An upper end portion of the outer member of the center pillar 23 overlaps, from the outer side in the vehicle width direction, the roof side reinforcement 46 located on the outer side in the vehicle width direction of the roof side rail 17 and is joined thereto by spot welding at multiple points. A lower end portion of the inner member of the center pillar 23 overlaps, from the inner side in the vehicle width direction, the side sill inner panel 57 located on the inner side in the vehicle width direction of the side sill 20 and is joined thereto by spot welding at multiple points. A lower end portion of the outer member of the center pillar 23 overlaps, from the outer side in the vehicle width direction, the side sill outer panel 58 located on the outer side in the vehicle width direction of the side sill 20 and is joined thereto by spot welding at multiple points.

As described above, the center pillar 23 is provided between the roof side rail 17 and the side sill 20, and the joining between the center pillar 23 and the roof side rail 17 and between the center pillar 23 and the side sill 20 is performed without providing a hole in the side annular vehicle body frame 70 having an annular shape when viewed in the vehicle width direction. Thus, the cross section perpendicular to the annular direction of the side annular vehicle body frame 70 having an annular shape when viewed in the vehicle width direction forms a closed cross section at any position.

A roof front cross member 30 extending in the vehicle width direction is provided between the left and right side annular vehicle body frames 70 at the upper portions in the vehicle up-down direction and the front portions in the vehicle front-rear direction of the left and right side annular vehicle body frames 70. The left end, which is an end on one side, of the roof front cross member 30 is joined to a corner portion where the front pillar inclined portion 16a and the front pillar horizontal portion 16b of the front pillar 16 of the left side annular vehicle body frame 70 on one side meet through a connecting component (not shown). Similarly, the right end, which is an end on the other side, of the roof front cross member is joined to a corner portion where the front pillar inclined portion 16a and the front pillar horizontal portion 16b of the front pillar 16 of the right side annular vehicle body frame 70 on the other side meet through a connecting component (not shown). As described above, the roof front cross member 30 is provided between the left and right side annular vehicle body frames 70, and the joining between the roof front cross member 30 and the front pillar 16 is performed without providing a hole in the side annular vehicle body frame 70. Thus, the cross section perpendicular to the annular direction of the side annular vehicle body frame 70 having an annular shape when viewed in the vehicle width direction forms a closed cross section at any position.

A roof rear cross member 31 extending in the vehicle width direction is provided between the left and right side annular vehicle body frames 70 at the upper portions in the vehicle up-down direction and the rear portions in the vehicle front-rear direction of the left and right side annular vehicle body frames 70. The left end, which is an end on one side, of the roof rear cross member 31 is joined to a corner portion where the rail extension horizontal portion 17c and the rail extension inclined portion 17d in the roof side rail extension 17b of the left side annular vehicle body frame 70 on one side meet through a connecting component (not shown). Similarly, the right end, which is an end on the other side, of the roof rear cross member 31 is joined to a corner portion where the rail extension horizontal portion 17c and the rail extension inclined portion 17d in the roof side rail extension 17b of the right side annular vehicle body frame 70 on the other side meet through a connecting component (not shown). As described above, the roof rear cross member 31 is provided between the left and right side annular vehicle body frames 70, and the joining between the roof rear cross member 31 and the roof side rail extension 17b is performed without providing a hole in the side annular vehicle body frame 70. Thus, the cross section perpendicular to the annular direction of the side annular vehicle body frame 70 having an annular shape when viewed in the vehicle width direction forms a closed cross section at any position.

A roof center cross member 32 extending in the vehicle width direction is provided between the left and right side annular vehicle body frames 70 on the center in the vehicle front-rear direction at the upper portions in the vehicle up-down direction of the left and right side annular vehicle body frames 70. The left end, which is an end on one side, of the roof center cross member 32 is joined to the center of the roof side rail horizontal portion 17a of the left side annular vehicle body frame 70 on one side through a connecting component (not shown). Similarly, the right end, which is an end on the other side, of the roof center cross member 32 is joined to the center of the roof side rail horizontal portion 17a of the right side annular vehicle body frame 70 on the other side through a connecting component (not shown). As described above, the roof center cross member 32 is provided between the left and right side annular vehicle body frames 70, and the joining between the roof center cross member 32 and the roof side rail horizontal portion 17a is performed without providing a hole in the side annular vehicle body frame 70. Thus, the cross section perpendicular to the annular direction of the side annular vehicle body frame 70 having an annular shape when viewed in the vehicle width direction forms a closed cross section at any position.

A floor front cross member 33 extending in the vehicle width direction is provided between the left and right side annular vehicle body frames 70 at the lower portions in the vehicle up-down direction and the front portions in the vehicle front-rear direction of the left and right side annular vehicle body frames 70. The left end, which is an end on one side, of the floor front cross member 33 is joined to a forward portion of the side sill 20 of the left side annular vehicle body frame 70 on one side through a connecting component (not shown). Similarly, the right end, which is an end on the other side, of the floor front cross member 33 is joined to a forward portion of the side sill 20 of the right side annular vehicle body frame 70 on the other side through a connecting component (not shown). As described above, the floor front cross member 33 is provided between the left and right side annular vehicle body frames 70, and the joining between the floor front cross member 33 and the side sill 20 is performed without providing a hole in the side annular vehicle body frame 70. Thus, the cross section perpendicular to the annular direction of the side annular vehicle body frame 70 having an annular shape when viewed in the vehicle width direction forms a closed cross section at any position.

A floor rear cross member 34 extending in the vehicle width direction is provided between the left and right side annular vehicle body frames 70 at the lower portions in the vehicle up-down direction and the rear portions in the vehicle front-rear direction of the left and right side annular vehicle body frames 70. The left end, which is an end on one side, of the floor rear cross member 34 is joined to the rear side member 19 of the left side annular vehicle body frame 70 on one side near the position where the rear wheel house reinforcement 22 is joined through a connecting component (not shown). Similarly, the right end, which is an end on the other side, of the floor rear cross member 34 is joined to the rear side member 19 of the right side annular vehicle body frame 70 on the other side near the position where the rear wheel house reinforcement 22 is joined through a connecting component (not shown). As described above, the floor rear cross member 34 is provided between the left and right side annular vehicle body frames 70, and the joining between the floor rear cross member 34 and the rear side member 19 is performed without providing a hole in the side annular vehicle body frame 70. Thus, the cross section perpendicular to the annular direction of the side annular vehicle body frame 70 having an annular shape when viewed in the vehicle width direction forms a closed cross section at any position.

A floor center cross member 35 extending in the vehicle width direction is provided between the left and right side annular vehicle body frames 70 on the center in the vehicle front-rear direction at the lower portions in the vehicle up-down direction of the left and right side annular vehicle body frames 70. The left end, which is an end on one side, of the floor center cross member 35 is joined to the rear side member 19 of the left side annular vehicle body frame 70 on one side near the position where the side sill 20 is joined through a connecting component (not shown). Similarly, the right end, which is an end on the other side, of the floor center cross member 35 is joined to the rear side member 19 of the right side annular vehicle body frame 70 on the other side near the position where the side sill 20 is joined through a connecting component (not shown). As described above, the floor center cross member 35 is provided between the left and right side annular vehicle body frames 70, and the joining between the floor center cross member 35 and the rear side member 19 is performed without providing a hole in the side annular vehicle body frame 70. Thus, the cross section perpendicular to the annular direction of the side annular vehicle body frame 70 having an annular shape when viewed in the vehicle width direction forms a closed cross section at any position.

In the present embodiment, the roof front cross member 30, the roof rear cross member 31, and the roof center cross member 32, each of which is disposed between the side annular vehicle body frames 70 provided at the left and right side portions of the vehicle 1 when viewed in the front-rear direction and has the left end connected to the upper side portion of the left side annular vehicle body frame 70 on one side and the right end connected to the upper side portion of the right side annular vehicle body frame 70 on the other side, are included, and the floor front cross member 33, the floor rear cross member 34, and the floor center cross member 35, each of which has the left end connected to the lower side portion of the left side annular vehicle body frame 70 and the right end connected to the lower side portion of the right side annular vehicle body frame 70 are also included. Thus, it is possible to improve the strength and rigidity of the vehicle body 6 not only in the vehicle front-rear direction but also in the vehicle width direction, effectively reduce deformation of the cabin space, and also improve the NHV performance. Since the annular structure can be disposed surrounding the cabin space, the safety of the cabin space can be further improved.

Note that the roof front cross member 30, the roof rear cross member 31, and the roof center cross member 32 in the present embodiment are the roof cross member in the present invention. In addition, the floor front cross member 33, the floor rear cross member 34, and the floor center cross member 35 are the floor cross member in the present invention. In addition, "hole" in "the joining is performed without providing a hole in the side annular vehicle body frame 70 having an annular shape" is a hole for inserting the member or the like thereinto, and a bolt hole, a rivet hole, and the like are excluded.

The vehicle body side structure of the vehicle 1 having the door opening 10 opened and closed by the door in the present embodiment includes the side annular vehicle body frame 70 having an annular shape when viewed in the vehicle width direction, the side annular vehicle body frame 70 includes the hinge pillar 15 that constitutes the front peripheral edge portion 11a of the door opening 10 and extends in the up-down direction, the front pillar 16 that constitutes the front peripheral edge portion 11a of the door opening 10 and extends upward from the upper end of the hinge pillar 15, the roof side rail 17 that constitutes the upper peripheral edge portion 11b of the door opening 10 and extends rearward from the upper end of the front pillar 16, the rear pillar 18 that extends downward from the rear end of the roof side rail 17 at a distance rearward from the rear peripheral edge portion 11c of the door opening 10, the rear side member 19 that extends forward from the lower end of the rear pillar 18 at a distance downward from the lower peripheral edge portion 11d of the door opening 10, and the side sill 20 that constitutes the lower peripheral edge portion 11d of the door opening 10 and extends from the front end of the rear side member 19 to the lower end of the hinge pillar 15, and the cross section perpendicular to the annular direction of the side annular vehicle body frame 70 is formed as a closed cross section at any position in the annular direction.

Each of the frame members constituting the side annular vehicle body frame 70 is the constituent member of the vehicle body 6, and the cross section perpendicular to the annular direction of the side annular vehicle body frame 70 is formed as a closed cross section at any position in the annular direction. Thus, reducing the addition of new dedicated members makes it possible to efficiently improve the vehicle body rigidity while reducing an increase in the vehicle body weight of the vehicle 1 and also improve the vibration characteristics of the vehicle body. In particular, since the rear pillar 18 extends downward from the rear end of the roof side rail 17 on the rear side relative to the peripheral edge portion 11 on the rear side of the door opening 10, it is possible to further reduce deformation of the space of the cabin 5 including the occupant room 3 and the luggage space 4, prevent crushing of the space of the cabin 5 in the event of a collision, and also improve the safety of an occupant.

In the present embodiment, the rear pillar 18 includes the rear suspension coupling portion 21c coupled to the rear suspension holding portion 9, and the rear pillar 18 supports the rear suspension holding portion 9 by the rear suspension coupling portion 21c coupled to the rear suspension holding portion 9. Thus, the vibration characteristics of the vehicle body 6 can be improved.

In the present embodiment, the cross section perpendicular to the annular direction of the side annular vehicle body frame 70 is formed as a closed cross section having no inside corner at any position. The closed cross section having no inside corner increases the cross-sectional strength, thereby making it possible to prevent crushing of the closed cross section and deformation of the frame members constituting the side annular vehicle body frame 70.

In the present embodiment, the cross section perpendicular to the annular direction of the side annular vehicle body frame 70 is formed as a quadrangular closed cross section at any position. The quadrangular closed cross section increases the strength of the closed cross section itself, thereby making it possible to reduce crushing of the closed cross section and deformation of the annular structure. The rigidity of the annular structure can be improved.

In the present embodiment, the hinge pillar 15, the front pillar 16, the roof side rail 17, the rear pillar 18, the rear side member 19, and the side sill 20 are sequentially joined, and at least two adjacent edge lines in the annular direction of the side annular vehicle body frame 70 whose cross section perpendicular to the annular direction is formed as a quadrangular cross section are continuous at each of the joining portions where the hinge pillar 15, the front pillar 16, the roof side rail 17, the rear pillar 18, the rear side member 19, and the side sill 20 are sequentially joined. Since at least two adjacent edge lines in the annular direction of the side annular vehicle body frame 70 are continuous at each of the joining portions, it is possible to prevent stress concentration caused by a step or the like at the joining portions between the frame members, distribute the load to the entire side annular vehicle body frame 70, reduce deformation of the annular shape, and reduce deformation of the vehicle body 6.

In the present embodiment, there is a commonality in that the roof side rail horizontal portion 17a includes the roof side reinforcement 46 located on the outer side in the vehicle width direction, and the rail extension horizontal portion 17c and the rail extension inclined portion 17d of the roof side rail extension 17b also include the roof side reinforcement 46 located on the outer side in the vehicle width direction. However, the roof side rail horizontal portion 17a and the roof side rail extension 17b do not necessarily have to include the same member located on the outer side in the vehicle width direction in common, and the roof side rail horizontal portion 17a and the roof side rail extension 17b may be configured to include different members located on the outer side in the vehicle width direction. However, in the case in which the roof side rail horizontal portion 17a and the roof side rail extension 17b include different members, the joining structure shown in Figures 16(a) to (c) is required.

Although, in the present embodiment, in the joining structure between the frame members constituting the side annular vehicle body frame 70, the end faces of the frame members are not butt-joined but joined in an overlapping manner by spot welding, this is not necessarily a limitation. For example, the end faces of the frame members may be butted together and the butted faces may be welded throughout the entire circumference thereof as long as the cross section perpendicular to the annular direction of the side annular vehicle body frame 70 having an annular shape is formed as a closed cross section at the joining portions between the frame members.

Although, in the present embodiment, the frame members constituting the side annular vehicle body frame 70 are joined to each other to constitute the side annular vehicle body frame 70 having an annular shape when viewed in the vehicle width direction, this is not necessarily a limitation. For example, at least any two of the frame members may not be joined, but may be integrally formed.

Although, in the present embodiment, the side sill 20 has been described as the side lower reinforcing member, this is not necessarily a limitation. The side lower reinforcing member may not be the side sill, but, although not shown, may be configured as a frame member including a side member and a floor panel that form a closed cross section. The frame member including the side member and the floor panel that form a closed cross section constitutes the lower peripheral edge portion 1 1d of the door opening 10 and extends from the front end of the rear side member 19 to the lower end of the hinge pillar 15 as with the side sill 20. The cross section of the side member has a U shape with an upper opening or a hat shape. The floor panel is a panel member constituting a floor portion of the lower portion of the vehicle body 6 and has a plate shape extending in the vehicle front-rear direction. The frame member including the side member and the floor panel that form a closed cross section has the closed cross section extending in the front-rear direction, the closed cross section being formed by joining the side member located on the cabin outer side (the lower side in the up-down direction) to the floor panel located on the cabin inner side (the upper side in the up-down direction) at both flange portions by spot welding.

A joining structure between the frame member including the side member and the floor panel that form a closed cross section and the rear side member 19 and a joining structure between the frame member including the side member and the floor panel that form a closed cross section and the hinge pillar 15 are similar to those in the case of the side sill 20, and a hollow closed cross section is formed at any of the joining portions. In addition, at least two adjacent edge lines in the annular direction of the side annular vehicle body frame 70 are continuous at the joining portion between the frame member including the side member and the floor panel that form a closed cross section and the rear side member 19 and also continuous at the joining portion between the frame member including the side member and the floor panel that form a closed cross section and the hinge pillar 15.

Note that the side lower reinforcing member in the present invention is not limited to the case in which the side lower reinforcing member is constituted only of the side sill 20 or the case in which the side lower reinforcing member is constituted only of the frame member including the side member and the floor panel that form a closed cross section, and the side sill 20 and the frame member including the side member and the floor panel that form a closed cross section may be joined and integrally formed.

Although some embodiments of the present invention have been described above, it is additionally to be noted that the present invention is not limited to the embodiments described above and various modifications and changes can further be made within the scope of the present invention.

### [Reference Signs List]

- 1: Vehicle
- 2: Vehicle side portion
- 3: Occupant room
- 4: Luggage space
- 5: Cabin
- 6: Vehicle body
- 7: Roof portion
- 8: Rear wheel house
- 9: Rear suspension holding portion
- 10: Door opening
- 11: Peripheral edge portion
- 11a: Front peripheral edge portion
- 11b: Upper peripheral edge portion
- 11c: Rear peripheral edge portion
- 11d: Lower peripheral edge portion
- 15: Hinge pillar
- 16: Front pillar
- 16a: Front pillar inclined portion
- 16b: Front pillar horizontal portion
- 17: Roof side rail
- 17a: Roof side rail horizontal portion
- 17b: roof side rail extension
- 17c: Rail extension horizontal portion
- 17d: Rail extension inclined portion
- 18: Rear pillar
- 19: Rear side member
- 20: Side sill
- 21: Quarter pillar
- 21a: Quarter pillar upper end portion
- 21b: Quarter pillar lower end portion
- 21c: Rear suspension coupling portion
- 21d: End flange portion
- 22: Rear wheel house reinforcement
- 23: Center pillar
- 30: Roof front cross member
- 31: Roof rear cross member
- 32: Roof center cross member
- 33: Floor front cross member
- 34: Floor Rear cross member
- 35: Floor center cross member
- 40: Dash side panel
- 41: Front door hinge reinforcement
- 42: Side body outer panel
- 43: Dash side lower panel
- 44: Front pillar inner panel
- 45: Front pillar upper reinforcement
- 46: Roof side reinforcement
- 47: Roof side rail inner
- 48: Quarter inner upper extension
- 49: Quarter inner upper panel
- 50: Quarter panel inner reinforcement
- 51: Wheel house inner panel
- 52: Wheel house reinforcement
- 53: Wheel house outer panel
- 54: Rear floor side member
- 55: Rear floor rear panel
- 56: Side sill rear outer panel
- 57: Side sill inner panel
- 58: Side sill outer panel
- 61: End plate A
- 62: Wheel house inner brace
- 62a: Vertical leg portion
- 62b: Horizontal leg portion
- 70: Side annular vehicle body frame

## Claims

1. A vehicle body side structure of a vehicle having a door opening opened and closed by a door, **characterized by** comprising:
a side annular vehicle body frame having an annular shape when viewed in a vehicle width direction, wherein
the side annular vehicle body frame includes:
a hinge pillar that constitutes a front peripheral edge portion of the door opening and extends in an up-down direction;
a front pillar that constitutes the front peripheral edge portion of the door opening and extends upward from an upper end of the hinge pillar;
a roof side rail that constitutes an upper peripheral edge portion of the door opening and extends rearward from an upper end of the front pillar;
a rear pillar that extends downward from a rear end of the roof side rail at a distance rearward from a rear peripheral edge portion of the door opening;
a rear side member that extends forward from a lower end of the rear pillar at a distance downward from a lower peripheral edge portion of the door opening; and
a side lower reinforcing member that constitutes the lower peripheral edge portion of the door opening and extends from a front end of the rear side member to a lower end of the hinge pillar, and
a cross section perpendicular to an annularly extending direction of the side annular vehicle body frame is formed as a closed cross section at any position in the annularly extending direction.

2. The vehicle body side structure of the vehicle according to claim 1, further comprising a rear wheel house covering a rear wheel of the vehicle, the rear wheel house including a rear suspension holding portion holding an upper end of a rear suspension, wherein
the rear pillar includes a rear suspension coupling portion coupled to the rear suspension holding portion, and
the rear pillar supports the rear suspension holding portion by the rear suspension coupling portion coupled to the rear suspension holding portion.

3. The vehicle body side structure of the vehicle according to claim 1, wherein the closed cross section of the side annular vehicle body frame is formed as a cross section having no inside corner at any position.

4. The vehicle body side structure of the vehicle according to claim 1, wherein the closed cross section of the side annular vehicle body frame is formed as a quadrangular cross section at any position.

5. The vehicle body side structure of the vehicle according to claim 4, wherein
the hinge pillar, the front pillar, the roof side rail, the rear pillar, the rear side member, and the side lower reinforcing member are sequentially joined, and
at least two adjacent edge lines in an annular direction of the side annular vehicle body frame are continuous at each of joining portions where the hinge pillar, the front pillar, the roof side rail, the rear pillar, the rear side member, and the side lower reinforcing member are sequentially joined.

6. A vehicle body structure of a vehicle **characterized by** comprising:
the side annular vehicle body frame according to any one of claims 1 to 5, the side annular vehicle body frame being provided on each of both side portions in a vehicle width direction of the vehicle;
a roof cross member having an end portion joined to an upper portion of one side annular vehicle body frame in the vehicle width direction and an end portion joined to an upper portion of the other side annular vehicle body frame in the vehicle width direction; and
a floor cross member having an end portion joined to a lower portion of the one side annular vehicle body frame and an end portion joined to a lower portion of the other side annular vehicle body frame.
